# EUROPEAN PATENT APPLICATION

(11) **EP 2 345 988 A1**
(43) Date of publication of application: **20.07.2011**
(21) Application number: 11000027.0
(22) Date of filing: 04.01.2011
(51) Int. Cl.: G06Q 30/00, H04N 5/00, H04N 7/173

(54) **System and method in a program recorder for managing advertisement presentation**

(30) Priority: 15.01.2010 US 295267 P; 18.11.2010 US 948928
(71) Applicant: Broadcom Corporation, Irvine, CA 92617 (US)
(72) Inventor: Karaoguz, Jeyhan, Irvine, CA 92606 (US); Samueli, Henry, Corona Del Mar, CA 92625 (US); Seshadri, Nambirajan, 92603 Irvine, CA 92603 (US)
(74) Representative: Jehle, Volker Armin

(57) **Abstract**

A system and method for managing advertisement presentation in user equipment, substantially as shown in and/or described in connection with at least one of the figures, as set forth more completely in the claims.

## Description

### CROSS-REFERENCE TO RELATED APPLICATIONS/INCORPORATION BY REFERENCE

This patent application is related to and claims priority from provisional patent application serial number 61/295,267 filed Jan. 15, 2010, and titled "SYSTEM AND METHOD IN A PROGRAM RECORDER FOR MANAGING ADVERTISEMENT PRESENTATION," the contents of which are hereby incorporated herein by reference in their entirety. This patent application is also related to U.S. Patent Application No. _/_,_, filed concurrently herewith, titled "SYSTEM AND METHOD FOR UPDATING ADVERTISING CONTENT FOR A RECORDED PROGRAM", Attorney Docket No. 21195US02; U.S. Patent Application No. _/__,__, filed concurrently herewith, titled "SYSTEM AND METHOD FOR PROVIDING USER SPECIFICATION OF ADVERTISING CONTENT", Attorney Docket No. 21196US02; U.S. Patent Application No. _/__,__, filed currently herewith, titled "SYSTEM AND METHOD FOR MONITORING AND REPORTING PRESENTATION OF RECORDED ADVERTISING CONTENT", Attorney Docket No. 21197US02; U.S. Patent Application No. __/__,__, , filed concurrently herewith, titled "SYSTEM AND METHOD FOR PROVIDING VIEWER IDENTIFICATION-BASED ADVERTISING", Attorney Docket No. 21198US02; and U.S. Patent Application No. _/__,__, filed concurrently herewith, titled "SYSTEM AND METHOD FOR COMMUNICATING PROGRAMMING AND ADVERTISING CONTENT THROUGH DIVERSE COMMUNICATION NETWORKS", Attorney Docket No. 21199US02. The contents of each of the above-mentioned applications are hereby incorporated herein by reference in their entirety.

### BACKGROUND OF THE INVENTION

Present recorded advertisements may be viewed or skipped (e.g., by fast-forwarding) by the viewer of recorded programming. Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

Various aspects of the present invention provide a system and method (e.g., in a program recorder) for managing advertisement presentation, substantially as shown in and/or described in connection with at least one of the figures, as set forth more completely in the claims.

According to an aspect of the invention, a method for managing advertisement presentation is provided, the method comprising:
in user equipment:
   recording television programming;
   playing back the recorded television programming; and
   prior to playing back the recorded television programming, interacting with a user to determine whether to present advertising content during playback of the recorded television programming.
Advantageously, said interacting with a user comprises presenting at least one incentive to the user for specifying that the recorded television programming is to be played back with advertising content.
Advantageously, said at least one incentive comprises a monetary incentive.
Advantageously, said interacting with a user comprises presenting at least one disincentive to the user for specifying that the recorded television programming is not to be played back with advertising content.
Advantageously, said interacting with a user comprises outputting an inquiry window to the user to inquire whether the user desires to view the recorded television programming with or without advertisements.
Advantageously, said interacting with a user comprises outputting information to the user regarding an amount of advertising that has been presented.
Advantageously, said interacting with a user comprises performing said interacting in response to a user input requesting playback of the recorded television programming.
Advantageously, the user equipment is a television set top box.
According to an aspect, a method for managing advertisement presentation is provided, the method comprising:
in user equipment:
   recording television programming;
   playing back the recorded television programming; and
   prior to playing back the recorded television programming, interacting with a content provider regarding whether to present advertising content during playback of the recorded television programming.
Advantageously, said interacting with a content provider comprises communicating with the content provider to determine whether the user is allowed to view the recorded television programming without advertising.
Advantageously, said interacting with a content provider comprises communicating with the content provider to obtain incentive information to present to the user for viewing the recorded television programming with advertisements.
Advantageously, the user equipment is a television set top box.
According to an aspect, a user equipment is provided for managing advertisement presentation, the user equipment comprising:
at least one module operable to, at least:
   record television programming;
   play back the recorded television programming; and
   prior to playing back the recorded television programming, interact with a user to determine whether to present advertising content during playback of the recorded television programming.
Advantageously, said at least one module is operable to interact with a user by, at least in part, operating to present at least one incentive to the user for specifying that the recorded television programming is to be played back with advertising content.
Advantageously, said at least one incentive comprises monetary incentives.
Advantageously, said at least one module is operable to interact with a user by, at least in part, operating to present one or more disincentives to the user for specifying the recorded television programming is not to be played back with advertising content.
Advantageously, said at least one module is operable to interact with a user by, at least in part, operating to output an inquiry window to the user to inquire whether the user desires to view the recorded television programming with or without advertisements.
Advantageously, said at least one module is operable to interact with a user by, at least in part, operating to output information to the user regarding an amount of advertising that has been presented.
Advantageously, said at least one module is operable to interact with a user by, at least in part, operating to perform said interacting in response to a user input requesting playback of the recorded television programming.
Advantageously, the user equipment is a television set top box.
According to an aspect, a user equipment is provided for managing advertisement presentation, the user equipment comprising:
at least one module operable to, at least:
   record television programming;
   play back the recorded television programming; and
   prior to playing back the recorded television programming, interact with a content provider regarding whether to present advertising content during playback of the recorded television programming.
Advantageously, said at least one module is operable to interact with a content provider by, at least in part, operating to communicate with the content provider to determine whether the user is allowed to view the recorded television programming without advertising.
Advantageously, said at least one module is operable to interact with a content provider by, at least in part, operating to communicate with the content provider to obtain incentive information to present to the user for viewing the recorded television programming with advertisements.
Advantageously, the user equipment is a television set top box.

These and other advantages, aspects and novel features of the present invention, as well as details of illustrative aspects thereof, will be more fully understood from the following description and drawings.

### BRIEF DESCRIPTION OF SEVERAL VIEWS OF THE DRAWINGS

Figure 1 shows a non-limiting exemplary flow diagram of a method for managing advertising information, in accordance with various aspects of the present invention.

Figure 2 illustrates a non-limiting exemplary flow diagram of a method for managing advertising information, in accordance with various aspects of the present invention.

Figure 3 is a diagram illustrating an exemplary video content distribution environment.

Figure 4 is a diagram illustrating various non-limiting aspects of exemplary user equipment, in accordance with various aspects of the present invention.

Figure 5 is a diagram illustrating exemplary modules and/or sub-modules for user equipment, in accordance with various aspects of the present invention

### DETAILED DESCRIPTION OF VARIOUS ASPECTS OF THE INVENTION

The following discussion will refer to various communication modules, components or circuits. Such modules, components or circuits may generally comprise hardware and/or a combination of hardware and software (e.g., including firmware). Such modules may also, for example, comprise a computer readable medium (e.g., a non-transitory medium) comprising instructions (e.g., software instructions) that, when executed by a processor, cause the processor to perform various functional aspects of the present invention. Accordingly, the scope of various aspects of the present invention should not be limited by characteristics of particular hardware and/or software implementations of a module, component or circuit unless explicitly claimed as such. For example and without limitation, various aspects of the present invention may be implemented by one or more processors (e.g., a microprocessor, digital signal processor, baseband processor, microcontroller, etc.) executing software instructions (e.g., stored in volatile and/or non-volatile memory). Also for example, various aspects of the present invention may be implemented by an application-specific integrated circuit ("ASIC") and/or other hardware components.

Additionally, the following discussion will refer to various system modules (e.g., user equipment modules). It should be noted that the following discussion of such various modules is segmented into such modules for the sake of illustrative clarity. However, in actual implementation, the boundaries between various modules may be blurred. For example, any or all of the functional modules discussed herein may share various hardware and/or software components. For example, any or all of the functional modules discussed herein may be implemented wholly or in-part by a shared processor executing software instructions. Additionally, various software sub-modules that may be executed by one or more processors may be shared between various software modules. Accordingly, the scope of various aspects of the present invention should not be limited by arbitrary boundaries between various hardware and/or software components, unless explicitly claimed.

The following discussion may also refer to communication networks and various aspects thereof. For the following discussion, a communication network is generally the communication infrastructure through which a communication device (e.g., a video recorder, a personal video recorder, an electronic device with video recording capability, a television receiver, a television, a television controller, a portable communication device, a video content provider, a television program provider, an advertising video provider, a data network communication service provider, etc.) may communicate with other systems. For example and without limitation, a communication network may comprise a cable and/or satellite television communication network, a cellular communication network, a telecommunication network, a general data communication network (e.g., the Internet) a wireless metropolitan area network (WMAN), a wireless local area network (WLAN), a wireless personal area network (WPAN), any home or premises communication network, etc. A particular communication network may, for example, generally have a corresponding communication protocol according to which a device (e.g., user equipment comprising an electronic device with video recording capability) may communicate with the communication network. Unless so claimed, the scope of various aspects of the present invention should not be limited by characteristics of a particular type of communication network and/or communication protocol.

Additionally, the following discussion will at times refer to video content. Such video content may, for example, comprise various types of television programming (e.g., television programs, news programs, sports programs, music television, movies, television series programs and/or embedded advertisements, educational programs, live or recorded television programming, broadcast/multicast/unicast television programming, etc.). Such video content may, for example, comprise real-time television broadcast programming (or multicast or unicast television programming) and/or user-stored television programming that is stored in user equipment (e.g., a VCR, PVR, etc.). Such video content may also, for example, comprise advertising video content (e.g., an audio/video commercial, a still image advertisement, a user-interactive advertisement, advertising content embedded in and/or separate from television programming, etc.). Such video content may also, for example, comprise graphical and/or textual content that may be displayed on a television screen (e.g., an electronic program guide, user interface menu, a television set-up menu, a typical web page, a document, a graphical video game, etc.).

Various aspects of the present invention may, for example in user equipment (e.g., an electronic device comprising video recording capability), comprise receiving and recording video content, playing back the recorded video content, and interacting with an entity external to the electronic device (e.g., a user, a commercial enterprise, and/or equipment thereof) to determine whether and/or how to present advertising content with the recorded video content.

As will be discussed in more detail below, in a non-limiting exemplary scenario, user equipment (e.g., a stand-alone video recorder, set-top box with video recording capability, video gaming device with video recording capability, a personal computing system with video recording capability, etc.) may be used to record and time-shift the presentation of a video program. The video program may have advertisements (e.g., video commercials) associated with the video program (e.g., embedded in the video program or otherwise associated with the video program). In such a scenario, the user equipment may interact with a user and/or a video content provider (e.g., an original video source and/or a video communication enterprise) to determine whether to present advertisements to the user and/or to manage user incentives and/or disincentives associated with presentation of the recorded video program.

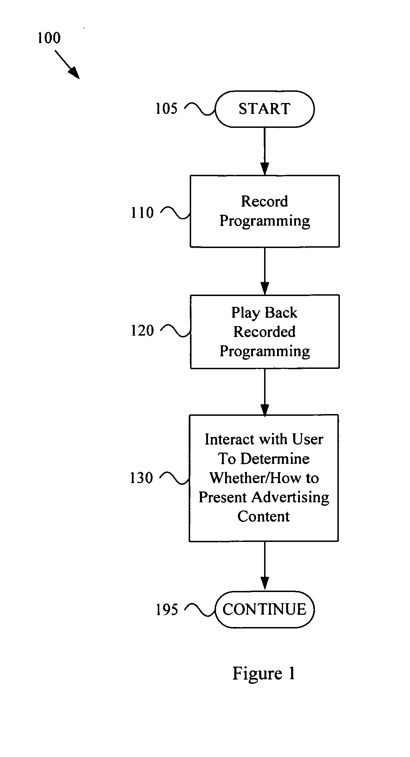

Turning first to Figure 1, such figure illustrates a non-limiting exemplary flow diagram of a method 100 for managing advertising information, in accordance with various aspects of the present invention. Any or all aspects of the exemplary method 100 may, for example, be implemented in user equipment with video content recording capability (e.g., a personal video recorder, a television receiver (or set top box) with video recording capability, a gaming device with video recording capability, a personal computing device (e.g., handheld, notebook, laptop, desktop, etc.) with video recording capability, etc.

The exemplary method 100 may begin executing at step 105. The method 100 may begin executing in response to any of a variety of causes and/or conditions, non-limiting examples of which will now be provided. For example, the exemplary method 100 may begin executing in response to a received user input command to immediately record video content (e.g., a television program). Also for example, the exemplary method 100 may begin executing in response to a video recording profile (e.g., a profile designating particular programs for recording, particular times and/or channels for recording, etc.) previously established by one or more users of the video equipment.

The exemplary method 100 may, for example at step 110, comprise recording video content (e.g., program content, advertising content, etc.). Various non-limiting examples of such recording will now be provided.

As discussed previously, recorded video content may comprise any of a variety of characteristics. For example and without limitation, such video content may comprise television program content and/or advertising content. For example, such video content may comprise television programming with advertising content embedded therein. Also for example, such video content may comprise television programming with advertising marker information embedded therein, where such marker information may, for example, identify particular advertising content and/or a source of such advertising content. Additionally for example, such video content may comprise advertising content independent of the program content.

Step 110 may, for example, comprise recording the video content in memory. Such memory may, for example, comprise one or more of: a hard drive, an optical storage device, a volatile memory, a non-volatile memory, a magnetic storage device, etc. Such memory may, for example, comprise memory of user equipment (e.g., an electronic device) implementing the method 100 and/or a memory communicatively coupled thereto (e.g., a local memory, a networked memory, a pluggable memory, a compact disk, a digital versatile disc, a laser disc, etc.).

Step 110 may also, for example, comprise maintaining an index of the recorded video content. Such index may, for example, comprise information identifying the recorded video content, information identifying a time/date stamp associated with the recorded video content (e.g., a time and/or date when such video content was broadcast). Such index may also, for example, comprise information identifying advertising content associated with recorded programming content.

In general, step 110 may comprise recording video content (e.g., program content, advertising content, etc.). Accordingly, the scope of various aspects of the present invention should not be limited by characteristics of any particular manner of performing such recording unless explicitly claimed.

The exemplary method 100 may, for example at step 120, comprise playing back recorded video content (e.g., recorded program content, recorded advertising content, etc.) to a user. Various non-limiting examples of such playing back will now be provided.

For example, step 120 may comprise receiving a user input indicative of a desire to have recorded video content (e.g., a recorded television program) played back to the user. For example, a user may peruse a list of video content recorded by a recording device and select a particular piece of recorded video content from such list.

Step 120 may comprise reading the recorded video content from a memory (e.g., from one or more of the memories discussed previously), converting such read video content into display driver signals, and driving at least one video display device to output the desired recorded video content in human-perceivable form. Also for example, step 120 may comprise communicating information of the read video content to another device (e.g., a television controller with display capability, a handheld electronic device with display capability, a personal computer, etc.) for display by such device.

In general, step 120 may comprise playing back recorded video content (e.g., recorded program content, recorded advertising content, etc.) to a user. Accordingly, the scope of various aspects of the present invention should not be limited by characteristics of any particular manner of performing such playback unless explicitly claimed.

The exemplary method 100 may, for example at step 130, comprise interacting with a user to determine whether and/or how to present advertising content to the user (e.g., before, during and/or after presentation of the recorded video content at step 120). Various non-limiting examples of such interacting will now be presented.

Note that although step 130 is illustrated in Figure 1 following the recording step 110 and the playback step 120, such interacting may be performed at any time (e.g., prior to and/or during steps 110 and 120). For example, step 130 may comprise performing the user interaction before desired video content is recorded. Also for example, step 130 may comprise performing the user interaction when a user requests playback of a recorded program. Additionally for example, step 130 may comprise performing the user interaction during playback of a recorded program (e.g., at a scheduled advertising break in the played back program, upon resumption of a paused program playback, etc.). Further for example, step 130 may comprise performing the user interaction at any time (e.g., in response to a user request for such interaction). Additionally for example, step 130 may comprise performing the user interaction in response to a command received from a video content provider (e.g., from a cable and/or satellite television company, from a source of Internet video content, etc.).

Step 130 may, for example, comprise interacting with a user (e.g., via an inquiry window GUI on a display of a television, on a display of a portable computing device, on a display of a television controller, etc.) to inquire whether the user desires to view played back video content (e.g., a played back television program) with or without advertisements. Also for example, step 130 may comprise interacting with the user to inquire about the amount of advertising content that the user desires to be presented during the played back video content.

Step 130 may, for example, comprise providing information to the user regarding various user incentives and/or disincentives associated with viewing advertisements (e.g., during the played back video content). Such incentives and/or disincentives may comprise any of a variety of characteristics, non-limiting examples of which will now be presented. Step 130 may comprise presenting such information always, in response to a special offer being made by an enterprise associated with providing video content or an enterprise associated with particular advertising, in response to user inquiry regarding incentives/disincentives, etc.

Regarding incentives for example, step 130 may comprise offering a user any one or more of a variety of incentives for viewing advertisements while viewing recorded video content (e.g., advertisements associated with particular video content, associated with a particular user, associated with a particular household, associated with a particular region, etc.). For example, step 130 may comprise offering the user account credits and/or refunds (e.g., from video content provider(s)) for viewing advertising. Also for example, step 130 may comprise offering the user privileges for premier television programming channels (e.g., viewing a particular amount of advertising may quality the user for access to premier programming).

Additionally, step 130 may comprise offering the user free or reduced-price telephone/Internet service. Further for example, step 130 may comprise offering the user premier levels of communication service (e.g., viewing a particular amount of advertising may quality the user for relatively higher bandwidth data services than normal). Also for example, step 130 may comprise providing coupons and/or rebate information (e.g., from video content providers, from advertising enterprises, etc.).

Regarding disincentives for example, step 130 may comprise notifying the user of an extra fee associated with playback of the recorded video content without advertisements (e.g., with regard to particular video content and/or video content in general). For example, such a fee may be levied on a program-by-program basis or as a package fee. Step 130 may also, for example, comprise notifying the user of a waiting period associated with advertisement-free playback, where such waiting period is significantly greater than a waiting period (if any) associated with advertised viewing.

Such incentive/disincentive information may, for example, be tied to programming packages, where such programming packages may be customized to particular users. For example, a user may pay a particular relatively low fee for service that requires all advertisements associated with played back video content to be viewed. Such service may, for example, not allow viewing of recorded video content without advertisements or may provide for fee-based viewing of recorded video content without advertisements.

In an exemplary scenario, a user may pay a relatively high fee for service that includes no advertisements. The user may, for example, pay a relatively moderate fee for service that requires a particular amount of advertising content to be presented (e.g., a particular percentage of programs to be viewed with advertising, a particular percentage of viewing time to be devoted to advertisements, etc.). In such a scenario, a user may then select whether a particular recorded program will be viewed with or without advertisements. Note that such operation may also be associated with programming/advertising content received and presented in real-time (e.g., total amount of advertising associated with both live and recorded content viewing may be considered).

In an exemplary scenario, where a user's service plan requires a particular amount of advertising to be played to the user in a particular time window, step 130 may comprise outputting information to the user regarding the amount of advertising that has been played to the user in the time window. For example, step 130 may comprise outputting a warning to the user if the user is falling behind on advertising consumption for a particular period of time or for a particular type of video service.

Also for example, in an exemplary scenario where a content provider is offering a particular incentive for viewing a particular advertisement or advertisement suite (e.g., offering the user double-time credit, etc.), step 130 may comprise receiving information regarding the incentive and communicating information of such incentive to the user. Step 130 may then comprise providing a convenient user input mechanism by which the user may input whether and/or how the user desires to view advertising content associated with a recorded program.

In general, step 130 may comprise interacting with a user to determine whether and/or how to present advertising content to the user. Accordingly, the scope of various aspects of the present invention should not be limited by characteristics of any particular manner of interacting with the user unless explicitly claimed.

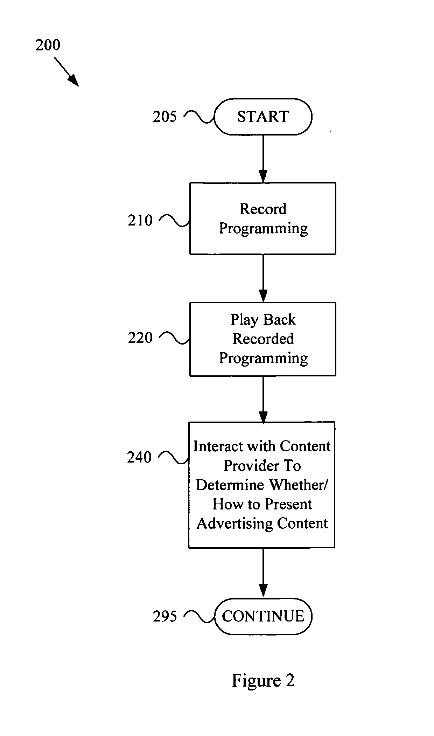

The exemplary method 100 may, at step 195, comprise continuing operation. Such continued operation may comprise any of a variety of characteristics, non-limiting examples of which will now be presented. For example, step 195 may comprise returning execution flow of the exemplary method 100 to any of the previous steps (e.g., for additional video content recording, playback and/or user interaction regarding advertising). Also for example, step 195 may comprise performing any other operations discussed herein (e.g., with regard to any of the steps of the exemplary method 200 illustrated in Figure 2 and discussed below). Further for example, step 195 may comprise presenting advertising content to the user in accordance with the determination made at step 130 (e.g., on a television screen, on a personal computer screen, on a screen in parallel to a television screen, etc.).

Turning next to Figure 2, such figure illustrates a non-limiting exemplary flow diagram of a method 200 for managing advertising information, in accordance with various aspects of the present invention. The exemplary method 200 may, for example, share any or all characteristics with the exemplary method 100 illustrated in Figure 1 and discussed previously. Any or all aspects of the exemplary method 200 may, for example, be implemented in user equipment with video content recording capability (e.g., a personal video recorder, a television receiver (or set top box) with video recording capability, a gaming device with video recording capability, a personal computing device (e.g., handheld, notebook, laptop, desktop, etc.) with video recording capability, etc.

The exemplary method 200 may begin executing at step 205. Step 205 may share any or all characteristics with step 105 of the exemplary method 100 illustrated in Figure 1 and discussed previously. Also for example, step 205 (or, for example, step 240) may begin executing at step 195 of the exemplary method 100 illustrated in Figure 1.

The exemplary method 200 may, for example at step 210, comprise recording video content (e.g., program content, advertising content, etc.). Step 210 may share any or all characteristics with step 110 of the exemplary method 100 illustrated in Figure and discussed previously.

The exemplary method 200 may, for example at step 220, comprise playing back recorded video content (e.g., recorded program content, recorded advertising content, etc.) to a user. Step 220 may share any or all characteristics with step 120 of the exemplary method 100 illustrated in Figure 1 and discussed previously.

The exemplary method 200 may, for example at step 240, comprise interacting with an enterprise (e.g., a video content provider, an advertising content provider, etc.) to determine whether and/or how to present advertising content to the user (e.g., before, during and/or after presentation of the recorded video content at step 220). Various non-limiting examples of such interacting will now be presented.

Step 240 may, for example, comprise communicating with upstream content providers regarding the presentation of advertising content with recorded video content before, during and/or after playback of such recorded video content. For example, step 240 may comprise communicating with an original source of programming and/or advertising content (e.g., a programming network like ABC, CBS, FOX, ESPN, HBO, Discover Channel, History Channel, etc.) regarding such presentation of advertising content (and also for acquiring such content). Also for example, step 240 may comprise communicating with an intermediate communication provider (e.g., a cable company, satellite network providers, Internet service provider, etc.) regarding such presentation of advertising content.

For example, step 240 may comprise communicating with a video content provider to determine whether a user is allowed to view recorded video content (e.g., in general, in general for a particular video content provider, for a particular video, etc.) without advertising. Also for example, step 240 may comprise communicating with a video content provider or other entity to determine how much and/or which advertising content to output with the recorded program.

Additionally for example, step 240 may comprise communicating with a video content provider or other entity to notify the content provider about how much advertising content a user has viewed. Similarly for example, step 240 may comprise communicating with a content provider (or other enterprise, for example an advertising enterprise) to notify the content provider about which advertising content a user has viewed. For example, step 240 may comprise communicating with a content provider (or other enterprise, for example an advertising enterprise) to notify the content provider of whether a user has viewed a recorded program with advertising or without advertising. Such information may, for example, be utilized by the content provider to determine which incentives and/or disincentives should be offered to the user (e.g., at step 130 of the method 100 illustrated in Figure 1 ).

In general, step 240 may comprise interacting with an enterprise to determine whether and/or how to present advertising content to the user. Accordingly, the scope of various aspects of the present invention should not be limited by characteristics of any particular manner of interacting with the enterprise unless explicitly claimed.

The exemplary method 200 may, at step 295, comprise continuing operation. Such continued operation may comprise any of a variety of characteristics, non-limiting examples of which will now be presented. For example, step 295 may comprise returning execution flow of the exemplary method 200 to any of the previous steps (e.g., for additional video content recording, playback and/or content provider interaction regarding advertising). Also for example, step 295 may comprise performing any other operations discussed herein (e.g., with regard to any of the steps of the exemplary method 100 illustrated in Figure 1 and discussed previously). Further for example, step 195 may comprise presenting advertising content to the user in accordance with the determination made at step 240 (e.g., on a television screen, on a personal computer screen, on a screen in parallel to a television screen, etc.).

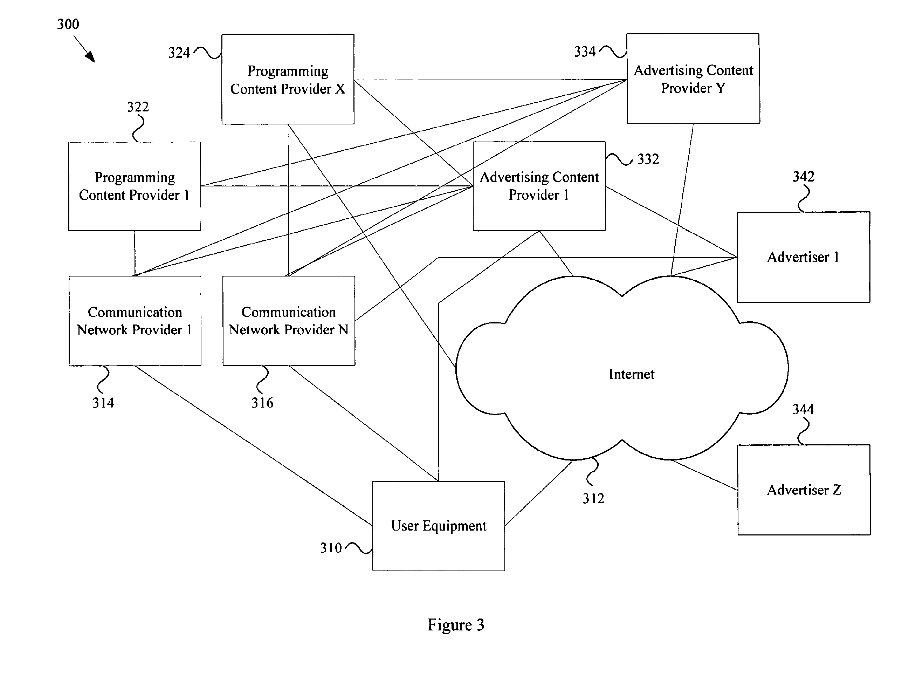

The previous discussions of Figures 1 and 2 included discussion of user equipment (e.g., a personal electronic device) with video content recording and playback capability performing various aspects of the present invention. Such previous discussion also included discussion of various video content sources. Figure 3 is provided herein to show a non-limiting example of a video content system including user equipment, content providers, and communication networks coupling such entities. Such illustrative video content system is merely illustrative and non-limiting.

Figure 3 is a diagram illustrating a video content (e.g., programming and/or advertising video content) distribution environment 300. The exemplary environment 300 comprises user equipment 310 (e.g., an end-user electronic device with video content recording and playback capability).

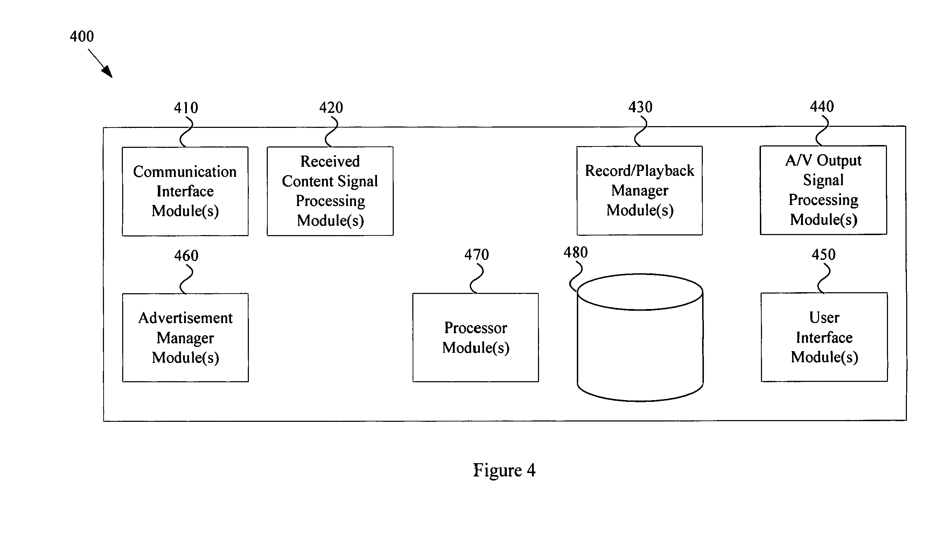

Such user equipment 310 may share any or all characteristics with the user equipment discussed elsewhere herein, including without limitation the user equipment 400 illustrated in Figure 4. The user equipment 310 may, for example, perform any or all of the functionality discussed previously with regard to the methods 100 and 200 illustrated in Figures 1-2 and discussed previously.

The exemplary environment 300 also comprises a plurality of communication networks (or communication network providers). For example, the user equipment 310 is communicatively coupled to a first communication network provider 314 and an N^{th} communication network provider 316. Such communication network providers (314 and 316) may operate to communicatively couple the user equipment 310 to any of a variety of different types of communication networks. For example, such communication network providers (314 and 316) may operate to provide the user equipment 310 access to cable and/or satellite television networks, wired and/or wireless telecommunication networks, wired and/or wireless data networks, wireless networks of various ranges (e.g., PANs, LANs, WANs, MANs, etc.), etc.

The exemplary environment 300 also comprises the Internet 312 (or Internet Service Provider). For example, the user equipment 310 may be communicatively coupled directly to the Internet 312 or via an Internet Service Provider. Note that the user equipment 310 may also, for example, be communicatively coupled to the Internet 312 via the first communication network provider 314 and/or N^{th} communication network provider 316.

The exemplary environment 300 also comprises a plurality of programming content providers (e.g., 1 to X programming providers). For example, the illustrated environment 300 shows a first programming content provider 322 and an X^{th} programming content provider 324. Such programming content providers (322 and 324) may operate to provide programming content (or any video content) to the user equipment 310 via any of the communication networks (or providers) discussed above. A programming provider may, for example, include a television programming provider, a computer network programming provider, a television network or portion thereof (e.g., Fox, NBC, CBS, ABC, ESPN, NFL, HGTV, etc.), etc.

In an exemplary scenario, the first programming content provider 314 may operate to communicate a first television program to the user equipment 310 via the first communication network provider 314. Such a first television program may, for example, comprise embedded first advertising video content that the first programming content provider 314 received from the first advertising content provider 332 and embedded into the first program.

In another exemplary scenario, the X^{th} programming content provider 314 may operate to communicate a second television program to the user equipment 310 via the N^{th} communication network provider 316 and/or via the Internet 312. Such second television program may, for example, alternatively contain no advertising content or contain advertising content received from any or all of the advertising content providers (332 or 334) or advertisers (342 or 344) in the environment 300 or external to the illustrated environment 300.

As mentioned previously (e.g., in the discussion of step 240), the user equipment 310 may interact with video content providers (e.g., programming content providers, advertising content providers, advertisers, communication service providers, etc.) to, at least in part, determine how to present advertising content. In such an exemplary scenario, the user equipment 310 operates to communicate with any or all of the communication network providers (314 and 316), the programming content providers (322 and 324), the advertising content providers (332 and 334), and the advertisers (342 and 344).

As mentioned above, advertising video content may be embedded in programming video content. Also for example, as illustrated by various communication pathways in the environment 300, the user equipment 310 may operate to receive advertising content directly from the advertising content providers or advertisers (e.g., advertising enterprises).

As referred to above, the exemplary environment 300 also, for example, comprises a plurality of advertising content providers (e.g., 1 to Y advertising content providers). For example, the illustrated environment 300 shows a first advertising content provider 332 and a Y^{th} advertising content provider 334. Such advertising content providers (332 and 334) may operate to provide advertising video content to the user equipment 310 via any of the communication networks (or providers) discussed above. Also for example, such advertising providers (332 and 334) may operate to provide advertising video content to the programming content providers (322 and 324) for ultimate communication to the user equipment 310 (e.g., embedded in a television program, communicated in a data stream independent of data streams communicating television programming, etc.).

Also, as mentioned above, the exemplary environment 300 also comprises a plurality of advertisers (e.g., 1 to Z advertisers). For example, the illustrated environment 300 shows a first advertiser 342 (e.g., a first commercial enterprise advertising a product or service provided by such first commercial enterprise) and a Z^{th} advertiser 344 (e.g., a Z^{th} commercial enterprise advertising a product or service provided by such Z^{th} commercial enterprise). As illustrated in Figure 3, such advertisers (342 and 344) may operate to communicate advertising content (or related information) to enterprises that specialize in generating video advertising content (e.g., advertising content providers 332 and 334), communicate advertising content (or related information) to programming content providers (e.g., the programming content providers 322 and 324), communicate advertising content (or related information) to communication network providers (or networks) (e.g., the communication network providers 314 and 316, the Internet 312 (or ISP), etc.), and/or communicate advertising content (or related information) directly to the user equipment 310).

In general, the exemplary environment 300 provides a non-limiting illustration of various entities that might or might not be present in any particular video content distribution system. Accordingly, the scope of various aspects of the present invention should not be limited by characteristics of the exemplary environment 300 unless explicitly claimed.

Figure 4 is a diagram illustrating various non-limiting aspects of exemplary user equipment 400. The user equipment may comprise characteristics of any of a variety of types of user equipment. For example and without limitation, the user equipment 400 may be or comprise an electronic device with video recording and playback capability. For example, the user equipment 400 may comprise a personal video recorder, a television receiver (or set top box, for example cable and/or satellite) with video recording capability, a gaming device with video recording capability, a television with video recording capability, a personal computing device (e.g., handheld, notebook, laptop, desktop, etc.) with video recording capability, a distributed home network comprising communicatively coupled devices that operate to record and/or playback video content, etc. Such user equipment 400 may, for example, be integrated into a single housing or a plurality of housings of a personal audio/video entertainment system. In a configuration comprising a plurality of housings, such user equipment may be co-located or positioned at geographically distinct locations.

The user equipment 400 may, for example, share any or all characteristics with the user equipment 310 of the environment 300 illustrated in Figure 3 and discussed previously. Also for example, the user equipment 400 (e.g., one or more modules thereof) may, for example, operate to perform any or all functionality discussed previously with regard to the methods 100 and 200 illustrated in Figures 1-2 and discussed previously.

The user equipment 400 may, for example, comprise one or more communication interface modules 410 that operate to perform any or all of the communication interface functionality discussed herein. The communication interface module(s) 410 may, for example, operate to communicate over any of a variety of communication media and utilizing any of a variety of communication protocols (e.g., including operating in accordance with various respective protocol layers, for example, PHY, MAC, network, transport, etc.). For example, the communication interface module 410 may be operable to communicate via one or more wired and/or wireless communication ports. The communication interface module(s) 410 may, for example, operate to communicate with one or more communication networks (e.g., cable television networks, satellite television networks, telecommunication networks, the Internet, local area networks, personal area networks, metropolitan area networks, etc.) via which video content (e.g., television program content, advertising video content, etc.) and/or other data *(e.g.,* information regarding the manner in which advertising video content is to be displayed, user information, account information, general data, etc.) is communicated. Also for example, the communication interface module(s) 410 may operate to communicate with local sources of video content (e.g., video recorders, receivers, gaming devices, etc.) that may, for example, be external to but communicatively coupled to the user equipment 400. Additionally, for example, the communication interface module(s) 410 may operate to communicate with a controller for the user equipment (e.g., directly or via one or more intermediate communication networks).

The exemplary user equipment 400 may also comprise additional communication interface modules, which are not illustrated. Such additional communication interface modules may, for example, share any or all aspects with the communication interface module(s) 410 discussed above.

The exemplary user equipment 400 may comprise one or more signal processing modules 420. Such signal processing module(s) 420 may, for example, operate to process received video and/or data content (e.g., programming and/or advertising content, user interface content received via a communication network etc.). Such signal processing modules may, for example and without limitation, comprise video decoding modules, transcoding modules that convert coded content from one code to another, audio processing modules, etc.

The exemplary user equipment 400 may comprise one or more video record/playback manager modules 430. Such module(s) 430 may operate to manage the recording and playback of video content (e.g., program content, advertising content, etc.). Such module(s) 430 may operate to perform any or all of the video recording and/or playback functionality discussed herein.

Such module(s) 430 may, for example, operate to utilize the user interface module(s) 450 to interact with a user regarding desired recording and playback operation. Such module(s) may, for example, operate to interact with the memory 480 (or with an external memory) for recording video content and/or reading recorded video content. Such module(s) 430 may, for example, operate to interact with the advertisement manager module(s) 460 which determines whether and/or how to present advertising content with program content. Such module(s) 430 may also, for example, operate to utilize the A/V output signal processing module(s) 440 to process output video content for ultimate presentation to a user.

As mentioned above, the exemplary user equipment 400 may also comprise one or more audio/video output signal processing modules 440. Such A/V output processing module(s) 440 may, for example, operate to process audio and/or video information for output to a display and/or speaker device. For example, such AN output processing module(s) 440 may operate to receive stored video content information from the memory 480 and process such information (e.g., performing decoding, performing decompressing, converting video data into video display driver signals, etc.) for output to a user. For example, the A/V output processing module(s) 440 may operate to output audio speaker and/or video display driver signals. Also for example, the A/V output processing module(s) 440 may operate to output processed audio and/or video data for further downstream processing (e.g., for ultimate presentation to a user in human-perceivable form).

The exemplary user equipment 400 may also comprise one or more user interface modules 450. The user interface module(s) 450 may generally operate to provide user interface functionality to a user of the user equipment 400. The user interface module(s) 450 may, for example, operate to perform any or all of the user interface functionality discussed herein.

For example, and without limitation, the user interface module(s) 450 may operate to provide for user control of any or all standard user equipment commands (e.g., video recording and/or playback control, for example, record commands, playback commands scheduled recording commands, channel control, on/off control, video input and/or output selection, programming interaction, interacting with the user regarding the presentation of advertising video content before, during and/or after the presentation of the recorded program video content, etc.).

The user interface module(s) 450 may, for example, operate to respond to user commands utilizing user interface features disposed on the user equipment 400 (e.g., buttons, etc.) and may also utilize the communication module(s) 410 to communicate with a controller (e.g., a dedicated user equipment remote control, a universal remote control, a cellular telephone, personal computing device, gaming controller, etc.). Further for example, the user interface module(s) 450 may utilize the communication module(s) 410 to communicate with another device external to the user equipment 400 to utilize the user interface features of such external device.

The exemplary user equipment 400 may comprise one or more processors 470. The processor(s) 470 may, for example, comprise a general purpose processor, digital signal processor, application-specific processor, microcontroller, microprocessor, etc. For example, the processor(s) 470 may operate in accordance with software (or firmware) instructions. As mentioned previously, in addition to or in lieu of any or all functionality discussed herein being performed by discrete hardware (e.g., in distinct separate integrated circuits or combined into a single integrated circuit), any or all functionality discussed herein may be performed by a processor executing instructions. For example, though various modules are illustrated as separate blocks or modules in Figure 4, such illustrative modules, or any portion thereof, may be implemented by the processor(s) 470.

The exemplary user equipment 400 may comprise one or more memories 480. As discussed above, any or all functional aspects discussed herein may be performed by one or more processors executing instructions. Such instructions may, for example, be stored in the one or more memories 480. Such memory 480 may, for example, comprise characteristics of any of a variety of types of memory. For example and without limitation, such memory 480 may comprise one or more memory chips (e.g., ROM, RAM, EPROM, EEPROM, flash memory, one-time-programmable OTP memory, etc.), hard drive memory, CD memory, DVD memory, etc.

Additionally, as discussed previously, the record/playback manager module(s) 430 may interact with the memory 480 to store video content in the memory 480 and/or retrieve stored video content from the memory 480. In such a scenario, the memory 480 may comprise separate memories or may be partitioned to accommodate stored video content and processor instructions, along with user data and any other type of data (e.g., user profile information, user account information, scratch pad data, etc.).

The exemplary user equipment 400 may also comprise one or more advertisement manager modules 460. Such advertisement manager module(s) 460 may, for example, operate to perform any or all of the advertisement management functionality discussed herein (e.g., determining whether and/or how to present advertising video content with played back recorded program video content).

For example and without limitation, the advertisement manager module(s) 460 may operate to perform any or all functionality with regard to step 130 of the exemplary method 100 illustrated in Figure 1 and discussed previously. For example, the module(s) 460 may operate to interact with a user (e.g., utilizing the user interface module(s) 450) to determine whether and/or how to present advertising content to the user (e.g., before, during and/or after presentation of the recorded video content). Various non-limiting examples of such operation will now be presented.

For example, the advertisement manager module(s) 460 may operate to interact with the user at any time (e.g., prior to, during and/or after recording video content, or prior to, during and/or after playing back recorded video content). For example, the module(s) 460 may operate to perform the user interaction before desired video content is recorded. Also for example, the module(s) 460 may operate to perform the user interaction when a user requests playback of a recorded program. Additionally for example, the module(s) 460 may operate to perform the user interaction during playback of a recorded program (e.g., at a scheduled advertising break in the played back program, upon resumption of a paused program playback, etc.). Further for example, the module(s) 460 may operate to perform the user interaction at any time (e.g., in response to a user request for such interaction). Additionally for example, the module(s) 460 may operate to perform the user interaction in response to a command received from a video content provider (e.g., from a cable and/or satellite television company, from a source of Internet video content, etc.).

The advertisement manager module(s) 460 may, for example, operate to interact with a user (e.g., via an inquiry window GUI on a display of a television, on a display of a portable computing device, on a display of a television controller, etc.) to inquire whether the user desires to view played back video content (e.g., a played back television program) with or without advertisements. Also for example, the module(s) 460 may operate to interact with the user to inquire about the amount of advertising content that the user desires to be presented during the played back video content.

The advertisement manager module(s) 460 may, for example, operate to provide information to the user (e.g., utilizing the user interface module(s) 450) regarding various user incentives and/or disincentives associated with viewing advertisements (e.g., during the played back video content). Such incentives and/or disincentives may comprise any of a variety of characteristics, non-limiting examples of which will now be presented. The module(s) 460 may operate to present such information always, in response to a special offer being made by an enterprise associated with providing video content or an enterprise associated with particular advertising (e.g., as received via the communication interface module(s) 410), in response to user inquiry regarding incentives/disincentives (e.g., as received via the user interface module(s) 450), etc.

Regarding incentives for example, the module(s) 460 may operate to offer a user any one or more of a variety of incentives for viewing advertisements while viewing recorded video content (e.g., advertisements associated with particular video content, associated with a particular user, associated with a particular household, associated with a particular region, etc.). For example, the module(s) 460 may operate to offer the user account credits and/or refunds (e.g., from video content provider(s)) for viewing advertising. Also for example, the module(s) 460 may operate to offer the user privileges for premier television programming channels (e.g., viewing a particular amount of advertising may quality the user for access to premier programming).

Additionally, the advertisement manager module(s) 460 may operate to offer the user free or reduced-price telephone/Internet service. Further for example, the module(s) 460 may operate to offer the user premier levels of communication service (e.g., viewing a particular amount of advertising may quality the user for relatively higher bandwidth data services than normal). Also for example, the module(s) 460 may operate to provide coupons and/or rebate information (e.g., from video content providers, from advertising enterprises, etc.). Note that information regarding any incentives provided to the user may be received via the communication interface module(s) 410 from any of a variety of sources (e.g., from video program providers, from communication network providers, from advertising content providers, from advertising enterprises, etc.).

Regarding disincentives for example, the advertisement manager module(s) 460 may operate to notify the user of an extra fee associated with playback of the recorded video content without advertisements (e.g., with regard to particular video content and/or video content in general). For example, such a fee may be levied on a program-by-program basis or as a package fee. The module(s) 460 may also, for example, operate to notify the user of a waiting period associated with advertisement-free playback, where such waiting period is significantly greater than a waiting period (if any) associated with advertised viewing.

Such incentive/disincentive information may, for example, be tied to programming packages, where such programming packages may be customized to particular users. For example, a user may pay a particular relatively low fee for service that requires all advertisements associated with played back video content to be viewed. Such service may, for example, not allow viewing of recorded video content without advertisements or may provide for fee-based viewing of recorded video content without advertisements.

In an exemplary scenario, a user may pay a relatively high fee for service that includes no advertisements. The user may, for example, pay a relatively moderate fee for service that requires a particular amount of advertising content to be presented (e.g., a particular percentage of programs to be viewed with advertising, a particular percentage of viewing time to be devoted to advertisements, etc.). In such a scenario, a user may then select whether a particular recorded program will be viewed with or without advertisements. Note that such operation may also be associated with programming/advertising content received and presented in real-time (e.g., total amount of advertising associated with both live and recorded content viewing may be considered).

In an exemplary scenario, where a user's service plan requires a particular amount of advertising to be played to the user in a particular time window, the module(s) 460 may operate to output information to the user regarding the amount of advertising that has been played to the user in the time window. For example, the module(s) 460 may operate to utilize the user interface module(s) 450 to output a warning to the user if the user is falling behind on advertising consumption for a particular period of time or for a particular type of video service.

Also for example, in an exemplary scenario where a content provider is offering a particular incentive for viewing a particular advertisement or advertisement suite (e.g., offering the user double-time credit, etc.), the module(s) 460 may operate to receive information regarding the incentive (e.g., via the communication interface module(s) 410) and communicate information of such incentive to the user (e.g., via the user interface module(s) 450). The module(s) 460 may then operate to provide a convenient user input mechanism by which the user may input whether and/or how the user desires to view advertising content associated with a recorded program.

In general, the advertisement manager module(s) 460 may operate to interact with a user to determine whether and/or how to present advertising content to the user. Accordingly, the scope of various aspects of the present invention should not be limited by characteristics of any particular manner of, or mechanism for, interacting with the user unless explicitly claimed.

Also for example, the advertisement manager module(s) 460 may operate to perform any or all functionality with regard to step 240 of the exemplary method 200 illustrated in Figure 2 and discussed previously.

The advertisement manager module(s) 460 may, for example, operate to utilize the communication interface module(s) 410 to interact with an enterprise (e.g., a video content provider, an advertising content provider, an advertising enterprise, etc.) to determine whether and/or how to present advertising content to the user (e.g., before, during and/or after presentation of the recorded video content). Various non-limiting examples of such interacting will now be presented.

The advertisement manager module(s) 460 may, for example, operate to communicate with upstream content providers regarding the presentation of advertising content with recorded video content before, during and/or after playback of such recorded video content. For example, the module(s) 460 may operate to communicate with an original source of programming and/or advertising content (e.g., a programming network like ABC, CBS, FOX, ESPN, HBO, Discover Channel, History Channel, etc.) regarding such presentation of advertising content (and also for acquiring such content). Also for example, the module(s) 460 may operate to communicate with an intermediate communication provider (e.g., a cable company, satellite network providers, Internet service provider, etc.) regarding such presentation of advertising content.

For example, the advertisement manager module(s) 460 may operate to communicate with a video content provider or other entity to determine whether a user is allowed to view recorded video content (e.g., in general, in general for a particular video content provider, for a particular video, etc.) without advertising. Also for example, the module(s) 460 may operate to communicate with a video content provider to determine how much and/or which advertising content to output with the recorded program.

Additionally for example, the advertisement manager module(s) 460 may operate to communicate with a video content provider or other entity (e.g., via the communication interface module(s) 410) to notify the content provider or other entity about how much advertising content a user has viewed. Similarly for example, the module(s) 460 may operate to communicate with a content provider (or other enterprise, for example an advertising enterprise) to notify the content provider about which advertising content a user has viewed. For example, the module(s) 460 may operate to communicate with a content provider (or other enterprise, for example an advertising enterprise) to notify the content provider of whether a user has viewed a recorded program with advertising or without advertising. Such information may, for example, be utilized by the content provider to determine which incentives and/or disincentives should be offered to the user (e.g., for communication to the user equipment 400 for presentation to the user).

In general, the advertisement manager module(s) 460 may operate to interact with an enterprise to determine whether and/or how to present advertising content to the user. Accordingly, the scope of various aspects of the present invention should not be limited by characteristics of any particular manner of or mechanism for interacting with the enterprise unless explicitly claimed.

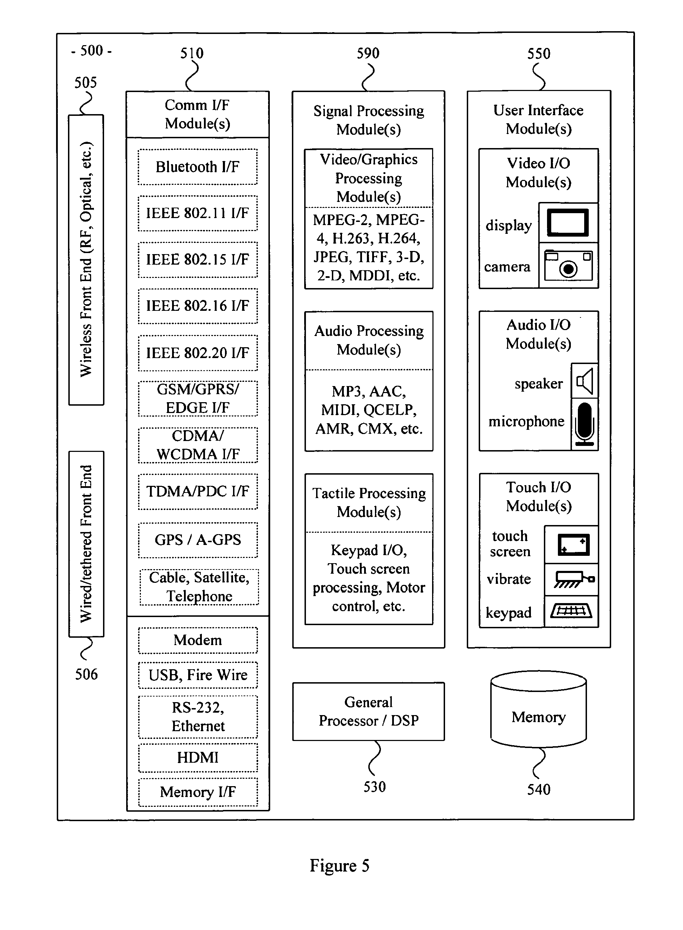

Turning next to Figure 5, such figure is a diagram illustrating exemplary modules and/or sub-modules for user equipment 500, in accordance with various aspects of the present invention. The exemplary user equipment 500 may share any or all aspects with any of the user equipment 310 and 400 discussed herein and illustrated in Figures 3 and 4. For example, the exemplary user equipment 500 (or various modules thereof) may operate to perform any or all functionality discussed herein with regard to the exemplary method 100 illustrated in Figure 1 and/or the exemplary method 200 illustrated in Figure 2. As with the exemplary user equipment 400, the components of the exemplary user equipment 500 may be disposed in a single user device (e.g., a personal video recorder, a television receiver with video recording capability, a gaming device with video recording capability, a personal computing device, etc.).

For example, the user equipment 500 comprises a processor 530. Such a processor 530 may, for example, share any or all characteristics with the processor(s) 470 discussed with regard to Figure 4. Also for example, the user equipment 500 comprises a memory 540. Such memory 540 may, for example, share any or all characteristics with the memory 480 discussed with regard to Figure 4.

Also for example, the user equipment 500 may comprise any of a variety of user interface module(s) 550. Such user interface module(s) 550 may, for example, share any or all characteristics with the user interface module(s) 450 discussed previously with regard to Figure 4. For example and without limitation, the user interface module(s) 550 may comprise: a display device, a camera (for still or moving picture acquisition), a speaker, an earphone (e.g., wired or wireless), a microphone, a video screen (e.g., a touch screen), a vibrating mechanism, a keypad, and/or any of a variety of other user interface devices (e.g., a mouse, a trackball, a touch pad, touch screen, light pen, game controlling device, etc.).

The exemplary user equipment 500 may also, for example, comprise any of a variety of communication modules (505, 506, and 510). Such communication module(s) may, for example, share any or all characteristics with the communication interface module(s) 410 discussed previously with regard to Figure 4. For example and without limitation, the communication interface module(s) 510 may comprise: a Bluetooth interface module; an IEEE 802.11, 802.15, 802.16 and/or 802.20 module; any of a variety of cellular telecommunication interface modules (e.g., GSM/GPRS/EDGE, CDMA/CDMA2000/1x-EV-DO, WCDMA/HSDPA/HSUPA, TDMA/PDC, WiMAX, etc.); any of a variety of position-related communication interface modules (e.g., GPS, A-GPS, etc.); any of a variety of wired/tethered communication interface modules (e.g., USB, Fire Wire, RS-232, HDMI, Ethernet, wire line and/or cable modem, etc.); any of a variety of communication interface modules related to communicating with external memory devices; etc. The exemplary user equipment 500 is also illustrated as comprising various wired 506 and/or wireless 505 front-end modules that may, for example, be included in the communication interface modules and/or utilized thereby.

The exemplary user equipment 500 may also comprise any of a variety of signal processing module(s) 590. Such signal processing module(s) 590 may share any or all characteristics with modules of the exemplary user equipment 400 that perform signal processing. Such signal processing module(s) 590 may, for example, be utilized to assist in processing various types of information discussed previously (e.g., with regard to sensor processing, position determination, video processing, image processing, audio processing, general user interface information data processing, etc.). For example and without limitation, the signal processing module(s) 590 may comprise: video/graphics processing modules (e.g. MPEG-2, MPEG-4, H.263, H.264, JPEG, TIFF, 3-D, 2-D, MDDI, etc.); audio processing modules (e.g., MP3, AAC, MIDI, QCELP, AMR, CMX, etc.); and/or tactile processing modules (e.g., keypad **I**/O, touch screen processing, motor control, etc.).

In summary, various aspects of the present invention provide a system and method (e.g., in a device or system with video content recording capability) for managing advertisement presentation. While the invention has been described with reference to certain aspects and embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

## Claims

1. A method for managing advertisement presentation, the method comprising:
in user equipment:
recording television programming;
playing back the recorded television programming; and
prior to playing back the recorded television programming, interacting with a user to determine whether to present advertising content during playback of the recorded television programming.

2. The method of claim 1, wherein said interacting with a user comprises presenting at least one incentive to the user for specifying that the recorded television programming is to be played back with advertising content.

3. The method of claim 2, wherein said at least one incentive comprises a monetary incentive.

4. The method of claim 1, wherein said interacting with a user comprises presenting at least one disincentive to the user for specifying that the recorded television programming is not to be played back with advertising content.

5. The method of claim 1, wherein said interacting with a user comprises outputting an inquiry window to the user to inquire whether the user desires to view the recorded television programming with or without advertisements.

6. The method of claim 1, wherein said interacting with a user comprises outputting information to the user regarding an amount of advertising that has been presented.

7. The method of claim 1, wherein said interacting with a user comprises performing said interacting in response to a user input requesting playback of the recorded television programming.

8. The method of claim 1, where the user equipment is a television set top box.

9. A method for managing advertisement presentation, the method comprising:
in user equipment:
recording television programming;
playing back the recorded television programming; and
prior to playing back the recorded television programming, interacting with a content provider regarding whether to present advertising content during playback of the recorded television programming.

10. The method of claim 9, wherein said interacting with a content provider comprises communicating with the content provider to determine whether the user is allowed to view the recorded television programming without advertising.

11. A user equipment for managing advertisement presentation, the user equipment comprising:
at least one module operable to, at least:
record television programming;
play back the recorded television programming; and
prior to playing back the recorded television programming, interact with a user to determine whether to present advertising content during playback of the recorded television programming.

12. The user equipment of claim 11, wherein said at least one module is operable to interact with a user by, at least in part, operating to present at least one incentive to the user for specifying that the recorded television programming is to be played back with advertising content.

13. The user equipment of claim 12, where said at least one incentive comprises monetary incentives.

14. A user equipment for managing advertisement presentation, the user equipment comprising:
at least one module operable to, at least:
record television programming;
play back the recorded television programming; and
prior to playing back the recorded television programming, interact with a content provider regarding whether to present advertising content during playback of the recorded television programming.

15. The user equipment of claim 14, wherein said at least one module is operable to interact with a content provider by, at least in part, operating to communicate with the content provider to determine whether the user is allowed to view the recorded television programming without advertising.
